# EUROPEAN PATENT SPECIFICATION

(11) **EP 0 784 871 B1**
(45) Date of publication and mention of the grant of the patent: **27.05.1998**
(21) Application number: 95934131.4
(22) Date of filing: 04.10.1995
(51) Int. Cl.: H01M 2/36

(54) **A RE-FILLING AND FUME-DISCHARGING DEVICE FOR ELECTRIC ACCUMULATOR BATTERIES**
VORRICHTUNG ZUR AUSFÜLLUNG UND ENTGASUNG VON ELEKTRISCHEN AKKUMULATOREN
DISPOSITIF DE REAPPROVISIONNEMENT ET D'EVACUATION DE FUMEES DESTINE A DES BATTERIES D'ACCUMULATEURS

(30) Priority: 04.10.1994 IT VI940139
(43) Date of publication of application: 23.07.1997
(73) Proprietor: Stocchiero, Olimpio, 36050 Montorso Vicentino (IT)
(72) Inventor: Stocchiero, Olimpio, 36050 Montorso Vicentino (IT)
(74) Representative: Bonini, Ercole
(86) International application number: PCT/EP95/03915
(87) International publication number: WO 96/10846

(56) References cited:
- EP-A- 0 234 278
- WO-A-87/01172
- DE-A- 3 539 167
- GB-A- 451 671

## Description

The invention concerns a device for the automatic re-filling of electrolyte and for discharging the fumes in the electric accumulator batteries.

It is a known fact that the re-fill of the electrolyte in electric accumulator batteries is done by suitable devices which are applied to the lid of the accumulator and permit the automatic re-fill.

Said devices for the automatic re-fill which are available on the market are manufactured according to different embodiments and consist essentially of a body which is sealingly inserted into the hole in the lid of the accumulator and which presents one or more channels for the inlet of the re-fill liquid, one channel for the exhaust of the fumes and a float, complete with sealing means which prevent further re-filling once the electrolyte has reached the predetermined level.

However, the mentioned devices for the automatic re-fill belonging to the known technique present some inconveniences.

One of these inconveniences consists in that the force with which the float pushes the sealing elements against the inlet opening of the re-fill liquid, in order to close it after the pre- determined level has been reached, is not sufficient to prevent leakages of the liquid due to vibrations during the re-fill operation.

For this reason the float is made with wide surfaces so as to insure a sufficient closing force on the sealing elements. In general it is made with diameters no smaller than 30 mm. It is then easy to understand that this creates one more inconvenience, since the holes which must be drilled in the lid of the accumulator through which the re-fill device is inserted, must have a diameter at least equal to the diameter of the float.

DE 3539167 discloses a filling apparatus wherein the liquid admission is automatically closed through a valve based on the additive action of a float and a magnet. This apparatus doesn't allow the introduction of a measuring device. The device forming the object of the present invention has the purpose of overcoming said inconveniences.

The first purpose of the invention is to obtain a device for the automatic re-fill of the electrolyte inside the accumulator batteries which guarantees the sealed closing of the hole for the inlet of the liquid once the level of the electrolyte has reached the desired value.

It is another purpose of the device according to the invention to guarantee the sealing capacity of the sealing means of the opening for the inlet of the re-fill liquid after the level has been restored, even in the presence of accidental vibrations generated while the battery is being used and during the re-fill process.

Not the last purpose of the device according to the invention is that it is provided with a float having smaller dimensions as compared with the floats applied to the devices belonging to the known technique and comparable with it.

The just described purposes are reached by a device suited for the automatic re-fill of the electrolyte and the discharge of the fumes which build up inside electric accumulators, which in accordance with the main claim is characterized in that it comprises:
- a body which can sealingly be attached to the lid of an electric accumulator and presents a cavity with a bottom, said body presenting one or more first holes communicating with first ducts for the discharge of the fumes and one or more second holes communicating with second ducts for the inlet of the re-fill liquid;
- a tubular element presenting an outer tubular section which matches said cavity in said body and a guiding element being co-axially cylindrical within said outer tubular section, said tubular element having in its interior and in an intermediate position of a transversal surface presenting a through-hole and laterally on the cylindrical wall at least one through-opening communicating with at least one of said one or more second holes belonging to said body;
- a tubular stick slidingly coupled in said hole, passing through said transversal surface and presenting at one end a floating body co-operating with the liquid contained within the accumulator and, at the opposite end, a flexible membrane connected with said tubular stick through first sealingly locking means and connected with the inner lateral surface of said tubular element through second sealingly locking means, said tubular stick presenting in an essentially intermediate position, closing means suited to cooperate with said hole in said transversal surface and seal it, so as to permit or prevent the passage of the re-fill liquid flowing from said one or more holes, said flexible membrane defining within said cavity of said tubular element, on one side, an exhaust chamber communicating with said one or more first holes and with the end of said tubular stick and, on the opposite side, a chamber for the build- up of the re-fill liquid which communicates with said one or more second holes and within which the pressure of said liquid contained therein causes a deformation of said membrane, thereby generating on said tubular stick a force which increases the pushing force created by the float against said closing means.

Advantageously and according to a preferred embodiment, said one or more first holes for the exhaust of the fumes and said one or more second holes for the inlet of the re-fill liquid, communicate respectively with channels for the gas exhaust and with channels for the inlet of the re-fill liquid which are present on the lid on which the device is applied.

According to a different embodiment of the invention, said inlet channels which communicate with said one or more first holes or with said one or more second holes, respectively, belong to the body of said device and protrude laterally in relation to it and they are complete with a hose connector.

According to yet another embodiment said one or more first holes can be replaced by a single hole drilled at the bottom of the body of said device, through which both the exhaust of the fumes during the re-fill process and the introduction of a hydrometer for the measuring of the density of the electrolyte can take place.

Further scope of applicability of the present invention will become apparent from the detailed description given hereinafter.

However, it should be understood that the detailed description and specific example, while indicating a preferred embodiment of the invention, are given by way of illustration only. In the drawings:
- Fig. 1 shows the automatic re-fill device represented in a cross-section;
- Fig. 2 shows an exploded view of the device represented in Fig. 1;
- Fig. 3 is an exploded view of the device of the invention represented in Fig. 1 and of the hole belonging to the lid of the accumulator into which said device is inserted;
- Fig. 4 shows the matching of the device according to the invention into the respective hole belonging to the respective lid of the accumulator and represented in Fig. 3;
- Fig. 5 shows a different embodiment of the automatic re-fill device according to the invention attached to the respective lid;
- Fig. 6 shows an exploded cross-section of a plurality of re- fill devices according to the invention and of the lid of the accumulator into which said devices are inserted;
- Fig. 7 shows the matching of the re-fill devices according to the invention in the lid of the accumulator represented in Fig. 6;
- Fig. 8 shows the re-fill device according to the invention during the re-fill process;
- Fig. 9 shows the re-fill device according to the invention once the re-fill process has been completed.
- Fig. 10 shows another embodiment of the automatic re-fill device according to the invention.

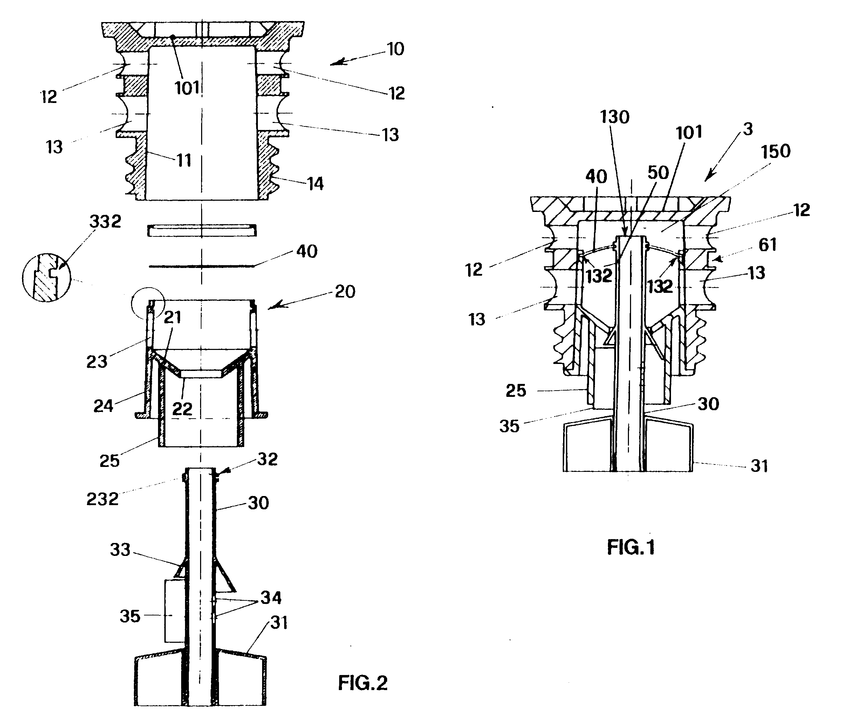

The device for the automatic re-fill of the electrolyte and for the discharge of the fumes from electric accumulators which forms the object of the present invention is represented in its assembled form in Fig. 1, where it is marked with 3, and in an exploded view of the parts which constitute it in Fig. 2.

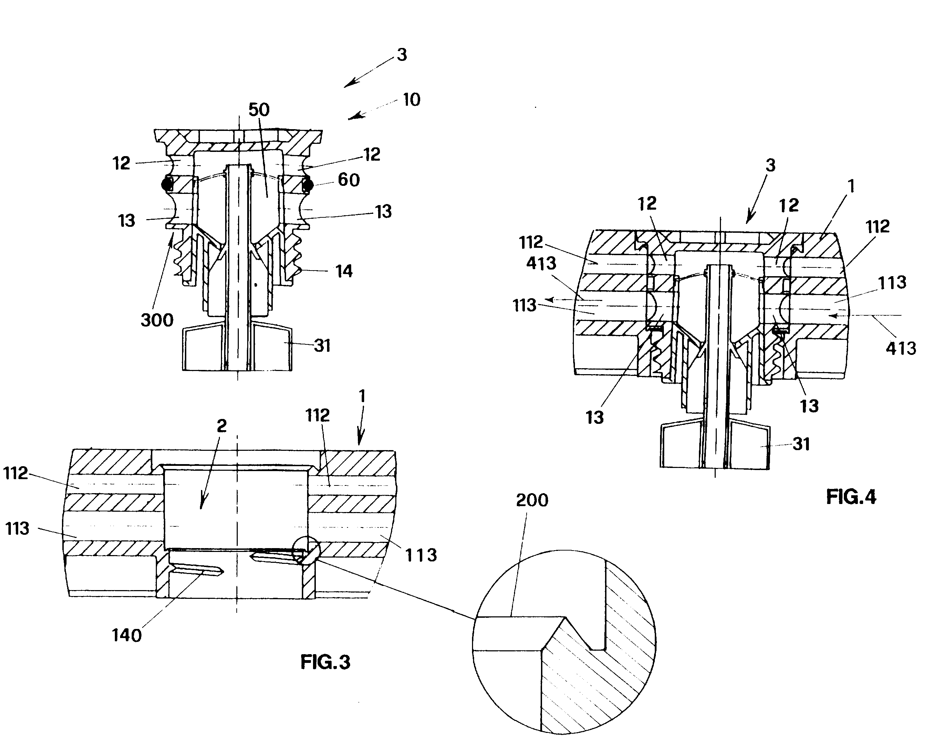

It will be observed that said device comprises a body 10 which, as can be observed in the Figs. 3 and 4, can be sealingly matched into hole 2 of a lid 1 of an electric accumulator and it presents a cavity 11 limited by a bottom 101. Said body 10 presents laterally one or more first holes 12, opposite to one another and lying essentially on the same plane and one or more second holes 13, also opposite to one another, co-planar and lying on a plane which is lower than the plane on which said first holes 12 lie. Said holes are connected which ducts which allow the discharge of the fumes from the accumulator and the inlet of the re-fill liquid into the accumulator respectively.

A tubular element 20 is attached to body 10. Said tubular element 20 consists of an outer tubular section 24 which is inserted into the cavity 11 of said body 10 and of a cylindrical guiding element 25 arranged co-axially within said outer tubular section 24.

A transversal surface 21, having the profile of a truncated cone and presenting a through-hole 22, is arranged inside said tubular element 20 and transversally in relation to it and it connects rigidly to one another said cylindrical guiding element 25 and the body of said tubular element 20.

Moreover, said tubular element 20 presents laterally on its cylindrical wall one or more through-openings 23, each of which communicates with at least one of said one or more second holes 13 belonging to said body 10, when said tubular element 20 is matched with body 10 itself.

The device according to the invention presents also a tubular stick 30 which is slidingly inserted into said through-hole 22 of said transversal surface 21. Said stick 30 presents at one end a floating body 31 which co-operates with the liquid contained within the accumulator, while at its other end there is a flexible membrane 40 which is connected with said tubular stick 30 by means of first sealingly locking means 32 and is also connected with the lateral inner surface of said tubular element 20 by means of second sealingly locking means 132. Said sealingly locking means, as can be observed in Fig. 2, consist of annular indentations 232 and 332 obtained in said tubular stick 30 and in said tubular element 20. Moreover, said tubular stick 30 also presents, in an essentially intermediate position, closing means consisting of a shutter 33 in the shape of a truncated cone, suited to intercept said hole 22 of said transversal surface 21. In order to insure the centering of said tubular stick 30 in the tubular element 20 into which it is inserted, it is complete with guiding elements 35 which slidingly match the inner surface of said guiding element 25, belonging to the tubular element 20.

As can be observed in the Figs. 3 and 4, in order to match the automatic re-fill device with lid 1 of the accumulator, the male thread 14 of body 10 of the device is tightened into the female thread 140 belonging to hole 2 drilled in lid 1, after an OR-ring 60 has been inserted into the annular seat 61 obtained in the outer part of body 10 and comprised between said first holes 12 and said first holes 13. Moreover, in correspondence with thread 140 there is a sealing surface 200 which achieves the hermetic seal when it lies flush against wall 300 of body 10 of device 3.

In a different embodiment the thread may be replaced by pressure insertable means.

Once the connection has been made, it can be observed in Fig. 4 that each of said one or more holes 12 are in communication with first fume-discharging ducts 112 obtained in lid 1 and, in the same way, said one or more second holes 13 are in communication with second ducts 113 for the inlet of the re-fill liquid, which are also obtained in lid 1.

It will be remarked that said ducts are obtained in lid 1 directly during its moulding process, whenever there is the intention of channeling the fumes exhausted from the accumulator in order to convey them to any area removed from the place where the re-fill operation is to be performed.

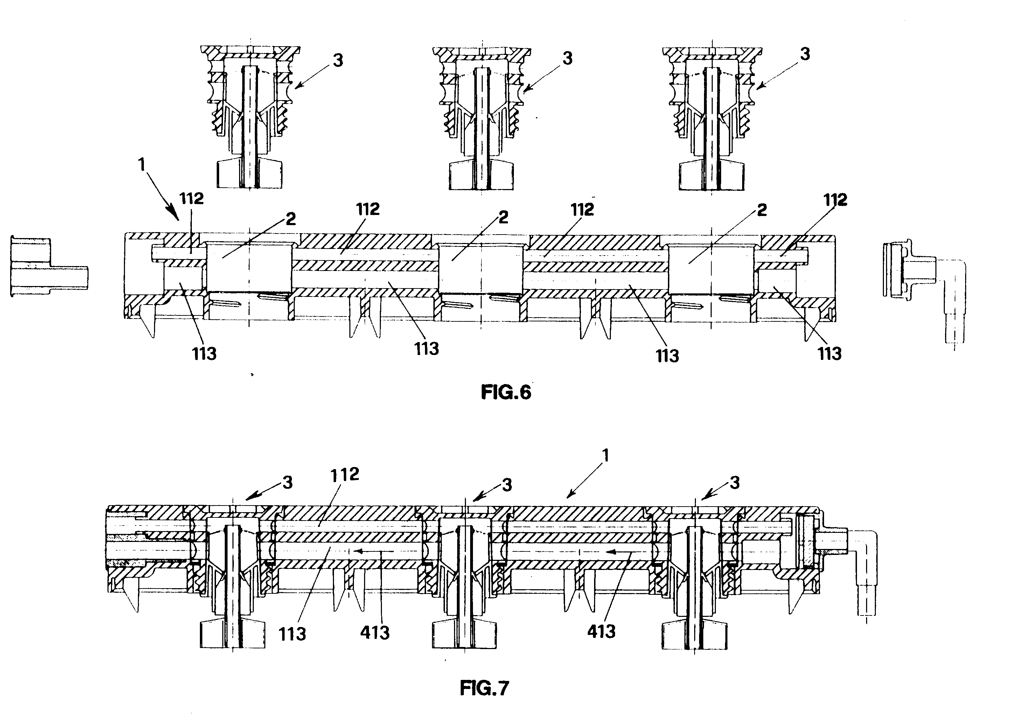

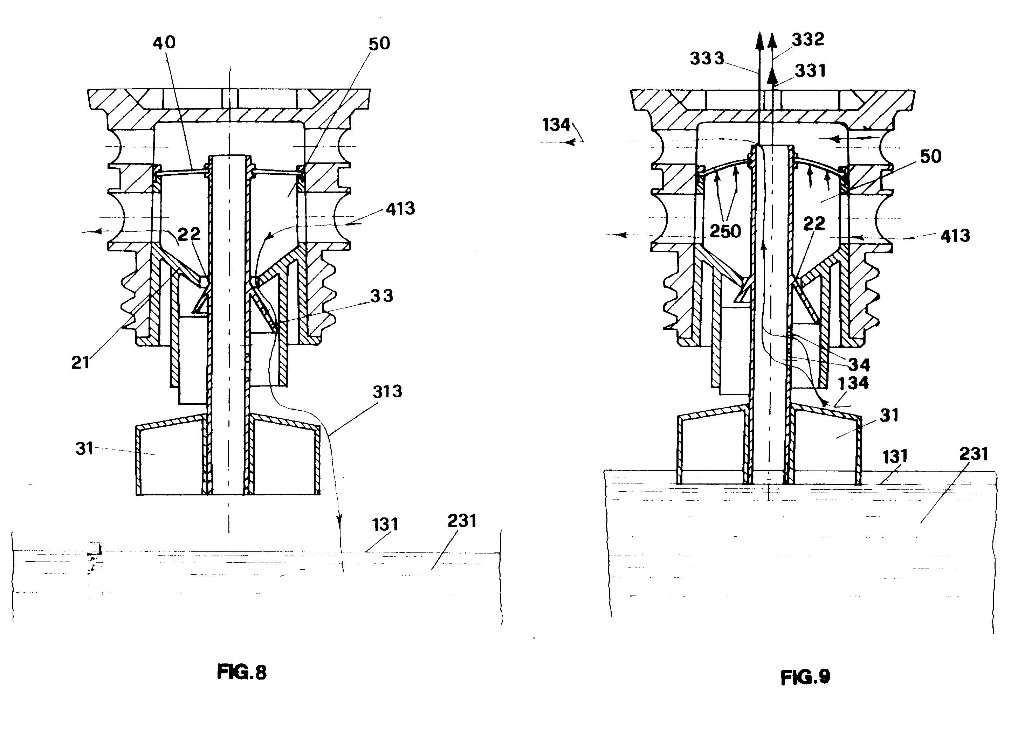

It is obvious, as can be observed in the Figs. 6 and 7, that one re-fill device is connected into each of the holes 2 drilled in lid 1 of the accumulator, where the first ducts 112 channel the exhaust fumes, while said second ducts 113 channel the re-fill liquid which is conveyed to the elements of the accumulator. After the re-fill devices 3 have been attached to lid 1, the re- fill process can begin, in that, as can be observed in Fig. 4, the re-fill liquid is introduced through second ducts 113 following direction 413. It is obvious that the re-fill liquid, as can be observed in Fig. 7, flows along said ducts 113, affecting all the re-fill devices, which are connected, therefore, in parallel with each other. It can be observed in Fig. 1 that the flexible membrane 40 defines within cavity 11 of body 10 of the device according to the invention an exhaust chamber 150 communicating with said one or more first holes 12 and with the end 130 of said tubular stick 30, on one side, and on the opposite side a chamber 50 for the build-up of the re-fill liquid, communicating with said one or more second holes 13. Therefore, as can be observed in the detail of Fig. 8, when the re-fill operation begins, the floating body 31 does not touch the upper surface 131 of the electrolyte liquid 231 and, as a consequence, shutter 33 leaves the through-hole 22 in the transversal wall 21 open because of the weight of stick 30 and of the floating body 31. Therefore, it allows the passage of the re-fill liquid flowing from said second ducts 113 into the build-up chamber 50 and entering from here, through the through- hole 22, into the accumulator following direction 313.

As can be observed in Fig. 9, the introduction of the re-fill liquid continues until the upper surface 131 of the electrolyte liquid 231 causes the floating body 31 to float and lifts it vertically with a force 331, so as to bring shutter 33 into the closing position against the through-hole 22.

When this condition occurs, the flow of the re-fill liquid through the second ducts 113 is interrupted and it causes within the build-up chamber 50 a pressure 250 against the flexible membrane 40 which causes its deformation, as can be observed in Fig. 9.

It will be specifically stated that said pressure 250 exerts on membrane 332 a force which is smaller that the total weight of said floating body 31, if the pressure of the liquid is not interrupted while the battery is in use. On the contrary, if the pressure of the liquid is interrupted, the pressure exerted on said membrane can be greater.

By acting against the surface of membrane 40, said pressure 250 generates force 332 following the same direction as force 331 due to the floating pressure. Thus a total force 333 for the shutting off of the through-hole 22 is obtained on stick 30 and, as a consequence, on shutter 33 belonging to it, said force 333 being stronger than force 331 due only to the floating effect. It is this additional force 332, caused by the deformation of membrane 40 because of the pressure of the re-fill liquid in chamber 50, which insures the perfect closing of shutter 33 in hole 22 even if the accumulator is exposed to vibrations during the re-fill operation. Thus, the danger of leakages due to sudden oscillations, which is incurred when re-fill devices belonging to the known technique are used, no longer exists.

Said additional force 332 due to the deformation of membrane 40 permits to obtain such closing pressure values on shutter 33, as to insure the tightness even with floats 31 having smaller diameters than the floats used with the automatic re-fill devices belonging to the known technique.

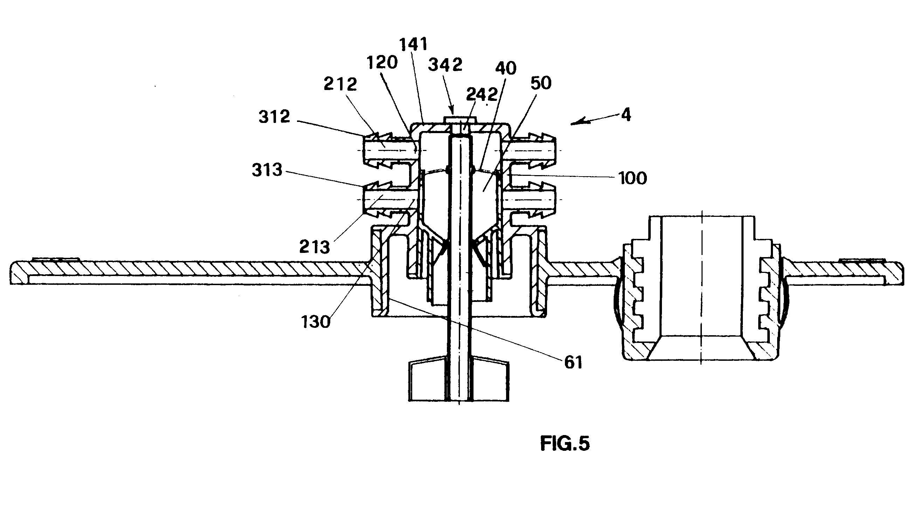

During the re-fill operation the through-holes 34 which are present laterally in the tubular stick 30 above the floating body 31 permit the exhaust of the fumes which flow through said holes following direction 134 and reach the outlet passing through said first holes 2 and said first exhaust ducts 112. A different embodiment of the automatic re-fill device according to the invention is represented in Fig. 5, wherein said device is marked as a whole with 4 and wherein it can be observed that said first holes 120 for the discharge of the fumes and said second holes 130 for the inlet of the re-fill liquid communicate respectively with said first ducts 212 for the discharge of the fumes and with second ducts 213 for the inlet of the re-fill liquid belonging to body 100 of said device 4. Said ducts are provided with the hose connectors 312 and 313 suited to receive each a hose for the channeling of the exhaust fumes and of the re-fill liquid.

The bottom 141 of body 100 of the device may also present a through-hole 242, said hole 242 allowing the introduction of a hydrometer for the electrolyte liquid.

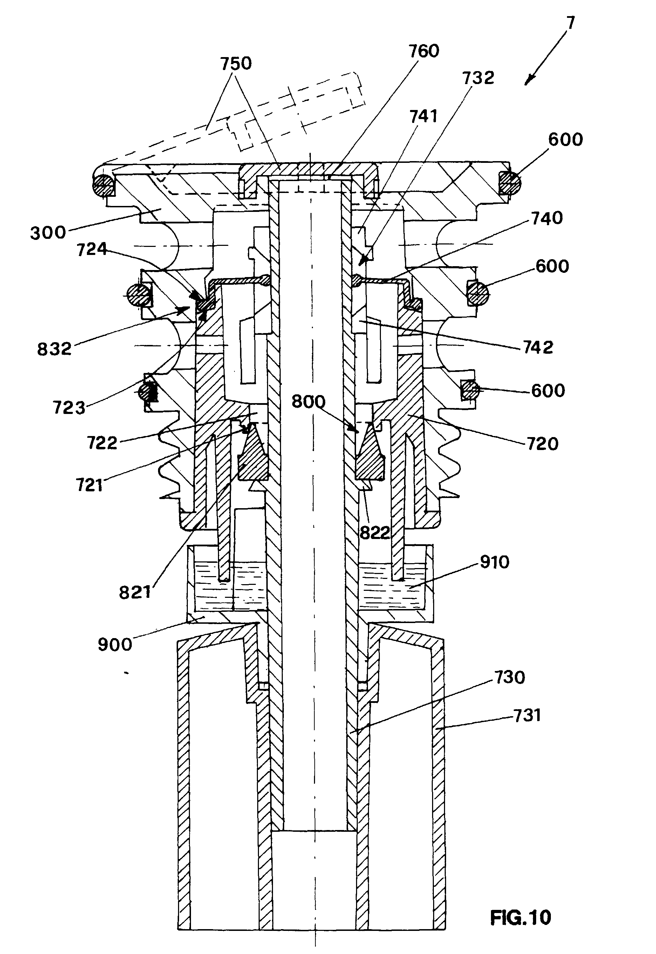

Another embodiment of the automatic refill device according to the invention is represented in Fig. 10, wherein it can be observed that it is marked with 7 as a whole. It will be observed that in this embodiment the flexible membrane 740 is connected with the tubular stick 730 through first sealingly locking means 732, which consist of a pair of rings 741 and 742, placed opposite to each other and co-axial with the tubular stick 730, which catch between them the rim of the membrane 740 comprised between them. Moreover, the flexible membrane 740 is also connected with the tubular element 720 through second sealingly locking means 832 which, as can be observed, are defined by the tilted plane 723 belonging to the tubular element 720 and by the corresponding shoulder 724 obtained in body 300 of the automatic re-fill device 7, between which the rim of membrane 740 corresponding with them is caught.

In this embodiment it can also be observed that the through-hole 722 drilled in the tubular element 720 is provided with a tapered seat 721 against which closing means contrast. Said closing means consist of a lip gasket in the shape of a truncated cone 821 which is pressed against a supporting ring 822 placed in an essentially central position in relation to said tubular stick 730.

Finally, it will be observed that between the float 731 and the stick 730 there is a cup 900 - co-axial with both of them - which collects within its cavity the re-fill liquid 910. This creates a hydraulic seal as far as the interior of the accumulator is concerned, which prevents possible fumes building up within the accumulator from escaping into device 7, where they would settle on its parts in relative motion and consequently impair its function.

Obviously the float 731 can be made in any dimension.

Body 300 presents also sealing elements 600 and a lid 750 for stopping hole 760 for the fume exhaust.

Another embodiment of the device, not represented in the drawings, may foresee for said through-hole 242, drilled at the bottom 141 of body 100 of said device, to be used as a hole for the exhaust of the fumes. In this case body 100 of device 4 will present only said second holes 130 communicating with said second ducts 213 for the inlet of the re-fill liquid.

On the basis of what has been described it can be understood that the device according to the invention in all of its different embodiments reaches the proposed purposes.

In fact, all the embodiments present the flexible membrane which, by generating a force in addition to the pushing force generated by the floating status of the floating body, ensures the closing of the hole for the inlet of the re-fill liquid, even in the presence of vibrations in the accumulator during the re-fill operation.

It has also been seen that the possibility of generating this additional closing force permits the use of floating bodies having a smaller diameter as compared with the floating bodies used in the re-fill devices belonging to the known technique, although they develop greater closing forces than the latter. It has also been seen that in its different embodiments the re- fill device according to the invention may be applied both on accumulators with lids which allow the channeling of the exhaust fumes and of the re-fill liquid through channels belonging to the lids themselves and on lids for accumulators wherein the re-fill devices are fed through a flexible hose which is connected with the device through a hose connector.

It has also been seen that the device according to the invention in any of the embodiments which have been described may present a hole suited to allow the introduction of an instrument for measuring the density of the electrolyte, said hole being also suited to be used for the exhaust of the fumes during the re-fill operation.

## Claims

1. A device (3; 4; 7) which can sealingly be inserted into the hole (2) of a lid (1) of an electric accumulator and suited for the automatic re-fill of the electrolyte and the discharge of the fumes which build up inside electric accumulators, characterized in that it comprises:
- a body (10; 100; 300) which presents a cavity (11) with a top (101; 141), said body presenting one or more first holes (12; 120) communicating with first ducts (112; 212) for the discharge of the fumes and one or more second holes (13; 130) communicating with second ducts (113; 213) for the inlet of the re-fill liquid;
- a tubular element (20; 720) presenting an outer tubular section (24) which matches said cavity (11) in said body and a guiding element (25) being co-axially cylindrical within said outer tubular section (24), said tubular element (20; 720) having in its interior and in an intermediate position of a transversal surface (21) presenting a through-hole (22; 522) and laterally on the cylindrical wall at least one or more through-openings (23) communicating with at least one of said one or more second holes (13) belonging to said body (10; 100; 300);
- a tubular stick (30; 730) slidingly coupled in said hole (22; 722), passing through said transversal surface (21) and presenting at one end a floating body (31; 731) intended to co-operate with the liquid (231) contained within the accumulator and, at the opposite end, a flexible membrane (40; 740) connected with said tubular stick (30; 730) through first sealingly locking means (32; 732) and connected with the inner lateral surface of said tubular element (20; 720) through second sealingly locking means (132; 832),
said tubular stick (30; 730) presenting in a substantially intermediate position, closing means (33; 821) suited to cooperate with said hole (22; 722) in said transversal surface (21) and seal it, so as to permit or prevent the passage of the re-fill liquid flowing from said one or more second holes (13; 130),
said flexible membrane defining within said cavity (11) of said body (10; 100; 300) on one side, an exhaust chamber (150) communicating with said one or more first holes (12; 120) and with the end of said tubular stick (30; 730) and, on the opposite side, a chamber for the build-up (50) of the re-fill liquid which communicates with said one or more second holes (13; 130) and within which the pressure (250) of said liquid contained therein may be varied to cause the deformation of said membrane, thereby generating on said tubular stick (30; 730) a force (332) which increases the pushing force (331) created by said floating body (31; 731) against said closing means (33).

2. A device (3; 4; 7) according to claim 1, characterized in that the pressure (250) of the liquid within said build-up chamber (50) is such as to exert on said membrane (40; 740) a force (332) which is smaller than the total weight of said floating body (31; 731) and of said stick (30; 730) supporting it.

3. A device (3; 4; 7) according to claim 1, characterized in that said tubular stick (30; 730) which supports said floating body (31; 731) presents one or more through-holes (34) for the discharge of the fumes, said through-holes being arranged above said floating body (31; 731).

4. A device (3; 4; 7) according to claim 1, characterized in that said tubular stick (30; 730) presents on its exterior some guiding fins (35) which slidingly match the inner surface of said guiding element (25).

5. A device (3; 7) according to claim 1, characterized in that said body (10) of said device presents an outer thread (14) which matches within the corresponding inner thread (140) which is present on the terminal end of said hole (2) belonging to said lid (1).

6. A device (3; 7) according to claim 1, characterized in that said one or more first holes (12) for the discharge of the fumes are two in number and are essentially placed opposite to each other on the same essentially horizontal plane and in that said second holes (13) for the inlet of the re-fill liquid are also two in number and are essentially placed opposite to each other on an essentially horizontal plane which is essentially parallel to the plane on which said first holes (12) lie, whereby said first holes (12) and said second holes (13) communicate each with channels (112) for the discharge of the fumes and with channels (113) for the inlet of the re-fill liquid obtained in the lid (1) which receives them.

7. A device (4) according to claim 1, characterized in that said one or more first holes (120) for the discharge of the fumes are two in number and are essentially placed opposite to each other on the same essentially horizontal plane and in that said second holes (130) for the inlet of the electrolyte are also essentially placed opposite to each other and lie on an essentially horizontal plane which is essentially parallel to the plane on which said first holes (120) lie, whereby said first and said second holes communicate each with channels (212) for the discharge of the fumes and with channels (213) for the inlet of the re-fill liquid which belong to said body (100) of said device (4) and in that they are complete with hose connections (312, 313).

8. A device (3; 4) according to claim 1, characterized in that said closing means consist of a shutter (33) having the shape of a truncated cone, suited to fit by interference inside the through-hole (22) drilled in said transversal surface (21) having the shape of a truncated cone.

9. A lid (1) for electric accumulators suited to receive the automatic re-fill devices (3; 7) according to claims from 1 to 4, characterized in that it presents a plurality of holes (2) each of them receiving said devices (3; 7), each of said holes (2) communicating with first ducts (112) for the discharge of the fumes exhausted from each battery element through first holes (12) belonging to the automatic re-fill device (3; 7), and with second ducts (113) for the inlet of the re-fill liquid through second holes (13) belonging to the automatic re-fill device (3; 7), said ducts (112, 113) being obtained by moulding of the plastic material in the thickness of the lid.

10. A device (3; 4; 7) according to claim 1, characterized in that said one or more first holes for the discharge of the fumes consist of a single through-hole (242; 760) drilled in the bottom (141) of said body (100; 300).

11. A device (3; 4; 7) according to claim 1, characterized in that said transversal surface (21) has the shape of a truncated cone converging toward the interior of the accumulator.

12. A device (3) according to claim 1, characterized in that said first sealingly locking means (32) consist of at least one annular indentation (232) obtained on said tubular stick (30), suited to receive the corresponding rim of said flexible membrane (40).

13. A device (3) according to claim 1, characterized in that said second sealingly locking means (132) consist of at least one annular indentation (332) obtained in said tubular element (20), suited to receive the corresponding rim of said flexible membrane (40).

14. A device (7) according to claim 1, characterized in that said closing means consist of a sealing lip (821) in the shape of a truncated cone, suited to sealingly match within said through hole (722) drilled in said tubular element (720).

15. A device (7) according to claim 1, characterized in that said first sealingly locking means (732) consist of a pair of rings (741, 742) placed opposite to each other and co-axial with said tubular stick (730), which catch between them the rim of said membrane (740) comprised between them.

16. A device (7) according to claim 1, characterized in that said second sealingly blocking means (832) consist of a slanted plane (723) belonging to said tubular element (720) and of its corresponding shoulder (724) obtained in the body (300) of the automatic re-fill device (7), between which the rim of said membrane (740) corresponding with them is caught.

17. A device (7) according to claim 10, characterized in that said body (300) of said device (7) is provided with a lid (750) for closing said single through hole (760) for the fume exhaust and for checking the level and the density of the electrolyte.

18. A device (7) according to claim 1, characterized in that a cup (900) is arranged between said floating body (731) and said stick (730) and is co-axial with both of them, said cup (900) being suited to hold in its cavity the re-fill liquid (910) necessary to create the hydraulic seal in relation to the interior of said accumulator.

## Patentansprüche

1. Eine Vorrichtung (3; 4, 7), die dicht abschließend in die Öffnung (2) eines Deckels (1) einer Sammlerbatterie eingesetzt werden kann und zur automatischen Füllsäuren-Nachfüllung sowie zur Abfuhr der Dämpfe dient, die innerhalb von Sammlerbatterien entstehen, dadurch gekennzeichnet, daß sie folgendes umfaßt:
- einen Körper (10; 100; 300), der einen Hohlraum (11) mit einem oberen Teil (101;141) aufweist; dieser Körper hat ein oder mehrere, erstes/erste Löcher (12; 120), die mit ersten Leitungen für die Dampfabfuhr (112; 212) kommunizieren, und mit einem oder mehreren zweiten Löchern (13; 130), die mit zweiten Leitungen (113; 213) für die Einfüllung der Nachfüllflüssigkeit kommunizieren;
- ein röhrenförmiges Element (20; 720) mit einem äußeren, röhrenförmigen Teil (24), der mit dem Hohlraum (11) in dem Körper zusammenpaßt, und ein Führungselement (25), das sich koaxial zylindrisch innerhalb des äußeren, röhrenförmigen Teils (24) befindet, wobei dieses röhrenförmige Element (20; 720) in seinem Inneren und in einer Zwischenposition einer Querfläche (21) ein durchgehendes Loch (22; 722) aufweist sowie seitlich an der zylindrischen Wand wenigstens ein oder mehrere weitere(s), durchgehende(s) Loch/Löcher (23), die mit wenigstens einem der/des besagten zweiten Lochs/Löcher (13) des Körpers (10; 100; 300) kommuniziert;
- einen röhrenförmigen Stab (30; 730), der in diesem Loch (22; 722) gleitend gekuppelt ist, durch die Querfläche (21) hindurchgeht und an einem Ende einen schwimmenden Körper (31; 731) aufweist, der mit der Flüssigkeit (231) innerhalb der Batterie zusammenwirkt, und am anderen Ende eine flexible Membran (40; 740) aufweist, die durch erste, dicht abschließende Mittel (32; 732) mit dem röhrenförmigen Stab (30; 730) und durch zweite, dicht abschließende Mittel (132; 832) mit der inneren Seitenfläche des röhrenförmigen Stabs (30; 730) verbunden ist;
wobei der röhrenförmige Stab (30;730) in einer im wesentlichen mittleren Position Schließvorrichtungen (33; 821) aufweist, die mit dem besagten Loch (22; 722) in der Querfläche (21) zusammenwirken und es dicht verschließen, um den Durchfluß der Nachfüllflüssigkeit aus dem einen oder den mehreren zweiten Löchern (13; 130) zu ermöglichen oder zu verhindern,
wobei die flexible Membran in dem Hohlraum (11) des Körpers (10; 100; 300) an einer Seite eine Auslaßkammer (150) definiert, die mit dem einen bzw. den mehreren ersten Löchern (12; 120) und mit dem Ende des röhrenförmigen Stabs (30; 730) zusammenwirkt und am anderen Ende eine Nachfüllkammer (50) für die Nachfüllflüssigkeit definiert, die mit der einen oder den mehreren zweiten Löchern (13; 130) zusammenarbeitet und in welcher der Druck (250) der besagten, darin enthaltenen Flüssigkeit verändert werden kann, um die Verformung der Membran zu bewirken, so daß hierdurch an dem röhrenförmigen Stab (30; 730) eine Kraft (332) ausgeübt wird, welche die durch den schwimmenden Körper (31; 731) gegen die Schließvorrichtung (33) ausgeübte Schubkraft (331) steigert.

2. Eine Vorrichtung (3; 4; 7) gemäß Patentanspruch 1, dadurch gekennzeichnet, daß der Druck (250) der Flüssigkeit innerhalb der Nachfüllkammer (50) so hoch ist, daß er eine Kraft (332) auf die besagte Membran (40; 740) ausübt, die kleiner ist als das Gesamtgewicht des schwimmenden Körpers (31; 731) und des Stabs (30; 730), der die Membran hält.

3. Eine Vorrichtung (3; 4; 7) gemäß Patentanspruch 1, dadurch gekennzeichnet, daß der röhrenförmige Stab (30; 730), der den schwimmenden Körper (31; 731) trägt, ein oder mehrere durchgehendes/durchgehende Löcher (34) zur Abfuhr der Dämpfe aufweist, wobei diese durchgehenden Löcher sich oberhalb des schwimmenden Körpers (31; 731) befinden.

4. Eine Vorrichtung (3; 4; 7) gemäß Patentanspruch 1, dadurch gekennzeichnet, daß der röhrenförmige Stab (30; 730), außen einige Führungsrippen (35) aufweist, die durch Verschieben mit der Innenfläche des genannten Führungselements (25) zusammenpassen.

5. Eine Vorrichtung (3; 7) gemäß Patentanspruch 1, dadurch gekennzeichnet, daß der Körper (10) der Vorrichtung ein Außengewinde (14) aufweist, das in das entsprechende Innengewinde (140) paßt, welches sich am abschließenden Ende des Loches (2) in dem Deckel (1) befindet.

6. Eine Vorrichtung (3; 7) gemäß Patentanspruch 1, dadurch gekennzeichnet, daß das bzw. die genannte(n) erste(n) Loch/Löcher (12) für die Dampfabfuhr zwei Stück sind und im wesentlichen einander auf derselben, im wesentlichen waagerechten Ebene gegenüberliegend angebracht sind, und daß die zweiten Löchern (13) zur Einfüllung der Nachfüllflüssigkeit ebenfalls zwei Stück sind, die im wesentlichen einander auf einer im wesentlichen waagerechten und zur Ebene, auf der sich die ersten Löcher (12) befinden, parallel stehenden Ebene gegenüberliegend angebracht sind und wobei die ersten Löcher (12) und die zweiten Löcher (13) jeweils mit Kanälen (112) zur Dampfabfuhr kommunizieren sowie mit Kanälen (113) zur Einfüllung der Nachfüllflüssigkeit, die im Deckel (1), der sie aufnimmt, angebracht sind.

7. Eine Vorrichtung (4) gemäß Patentanspruch 1, dadurch gekennzeichnet, daß das bzw. die erste(n) Loch/Löcher (120) für die Dampfabfuhr zwei Stück sind und im wesentlichen einander auf derselben, im wesentlichen waagerechten Ebene gegenüberliegend angebracht sind, und daß die zweiten Löcher (130) zur Einfüllung der Füllsäure ebenfalls im wesentlichen einander auf einer im wesentlichen waagerechten und zur Ebene, auf der sich die ersten Löcher (120) befinden, parallel stehenden Ebene gegenüberliegend angebracht sind und wobei die ersten Löcher und die zweiten Löcher jeweils mit Kanälen (212) zur Dampfabfuhr kommunizieren sowie mit Kanälen (213) für die Einfüllung der Nachfüllflüssigkeit, die zu dem Körper (100) der Vorrichtung (4) gehören und mit Schlauchverbindungen (312, 313) ausgestattet sind.

8. Eine Vorrichtung (3; 4) gemäß Patentanspruch 1, dadurch gekennzeichnet, daß das abschließende Mittel aus einem Verschluß (33) in der Form eines Kegelstumpfs besteht, der durch Interferenz in das durchgehende Loch (22) paßt, welches in die Querfläche (21) gebohrt und kegelstumpfförmig ist.

9. Ein Deckel (1) für Sammlerbatterien für die Aufnahme der automatischen Nachfüllvorrichtungen (3; 7) gemäß Patentansprüchen 1 bis 4, dadurch gekennzeichnet, daß er eine Vielzahl von Löchern (2) aufweist, von denen ein jedes die besagten Vorrichtungen (3; 7) aufnimmt und jedes der Löcher (2) mit ersten Leitungen (112) zur Abfuhr der von jedem Batterieelement abgegebenen Dämpfe über erste Löcher (12), die zur automatischen Nachfüllvorrichtung (3; 7) gehören, kommuniziert, sowie mit zweiten Leitungen (113) für die Einfüllung der Nachfüllflüssigkeit durch zweite Löcher (13), die zur automatischen Nachfüllvorrichtung (3; 7) gehören, wobei diese Leitungen (112, 113) durch Formen des Kunststoffs in der Dicke des Deckels erzielt werden.

10. Eine Vorrichtung (3; 4; 7) gemäß Patentanspruch 1, dadurch gekennzeichnet, daß ein oder mehrere erste(s) Loch/Löcher für die Dampfabfuhr aus einem einzelnen, durchgehenden Loch (242, 760) besteht, das in den Boden (141) des besagten Körpers (100; 300) gebohrt ist.

11. Eine Vorrichtung (3; 4; 7) gemäß Patentanspruch 1, dadurch gekennzeichnet, daß die Querfläche (21) kegelstumpfförmig ist und in das Innere der Batterie konvergiert.

12. Eine Vorrichtung (3) gemäß Patentanspruch 1, dadurch gekennzeichnet, daß das erste, dicht abschließende Mittel (32) aus wenigstens einer ringförmigen Vertiefung (232) an dem röhrenförmigen Stab (30) besteht, die dem entsprechenden Rand der flexiblen Membran (40) entspricht.

13. Eine Vorrichtung (7) gemäß Patentanspruch 1, dadurch gekennzeichnet, daß das zweite, dicht abschließende Mittel (132) aus wenigstens einer ringförmigen Vertiefung (332) an dem röhrenförmigen Element (20) besteht, die dem entsprechenden Rand der flexiblen Membran (40) entspricht.

14. Eine Vorrichtung (7) gemäß Patentanspruch 1, dadurch gekennzeichnet, daß das abschließende Mittel aus einer Dichtlippe (821) in der Form eines Kegelstumpfs besteht, die dicht abschließend in das durchgehende Loch (722) paßt, welches in das röhrenförmige Element (720) gebohrt ist.

15. Eine Vorrichtung (7) gemäß Patentanspruch 1, dadurch gekennzeichnet, daß das erste, dicht abschließende Mittel (732) aus einem Paar aus Ringen (741, 742) besteht, die einander gegenüberliegend und koaxial zum röhrenförmigen Stab (730) angeordnet sind und den zwischen ihnen befindlichen Rand der Membran (740) halten.

16. Eine Vorrichtung (7) gemäß Patentanspruch 1, dadurch gekennzeichnet, daß das zweite, dicht abschließende Mittel (832) aus einer schrägen Ebene (723) besteht, die zu dem röhrenförmigen Element (720) gehört, sowie aus dessen entsprechender Schulter (724), die aus dem Körper (300) der automatischen Nachfüllvorrichtung (7) gearbeitet ist, zwischen denen der Rand der Membran (740) gehalten wird.

17. Eine Vorrichtung (7) gemäß Patentanspruch 10, dadurch gekennzeichnet, daß der Körper (300) der automatischen Nachfüllvorrichtung (7) mit einem Deckel (750) versehen ist, um das einzelne, durchgehende Loch (760) für die Dampfabfuhr und für die Kontrolle des Füllstands und der Dichte der Füllsäure zu schließen.

18. Eine Vorrichtung (7) gemäß Patentanspruch 1, dadurch gekennzeichnet, daß ein Behälter (900) zwischen dem schwimmenden Körper (731) und dem Stab (730) angebracht ist und zu beiden koaxial steht, wobei dieser Becher (900) dazu dient, in seinem Hohlraum die Nachfüllflüssigkeit (910) zu enthalten, die erforderlich ist, um die hydraulische Abdichtung zum Inneren der Batterie zu erzeugen.

## Revendications

1. Un dispositif (3; 4; 7) qui peut être inséré d'une manière bloquante dans le trou (2) d'un couvercle (1) d'un accumulateur électrique et indiqué pour le remplissage automatique de l'électrolyte et l'élimination des fumées se formant à l'intérieur des accumulateurs électriques, caractérisé en ce qu'il comprend:
- un corps (10; 100; 300) qui présente une cavité (11) avec une couverture (101; 141), le dit corps présentant un ou plusieurs premiers trous (12; 120) communiquant avec de premiers conduits (112; 212) pour l'élimination des fumées et un ou plusieurs deuxièmes trous (13; 130) communiquant avec de seconds conduits (113; 213) pour l'entrée du liquide de remplissage;
- un élément tubulaire (20; 720) présentant une section tubulaire externe (24) qui s'adapte à la dite cavité (11) dans le dit corps et un élément de guidage (25) étant coaxialement cylindrique avec la dite section tubulaire externe (24), le dit élément tubulaire (20; 720) ayant dans sa partie intérieure et dans une position intermédiaire d'une surface transversale (21) présentant un trou passant (22; 722) et dans la partie latérale de la paroi cylindrique au moins une ou plusieurs ouvertures passantes (23) communiquant avec au moins un des dits un ou plusieurs deuxièmes trous (13) appartenant au dit corps (10; 100; 300);
- une barre tubulaire (30; 730) reliée d'une manière mobile au dit trou (22; 722) passant à travers la dite surface transversale (21) et présentant à une extrémité un corps flottant (31; 731) indiqué pour interagir avec le liquide (231) contenu à l'intérieur de l'accumulateur et, à l'autre extrémité, une membrane flexible (40; 740) reliée avec la dite barre tubulaire (30; 730) à travers de premiers moyens de blocage hermétique (32; 732) et reliée avec la surface latérale interne du dit élément tubulaire (20; 720) à travers de deuxièmes moyens de blocage hermétique (132; 832),
la dite barre tubulaire (30; 730) présentant dans une position essentiellement intermédiaire des moyens de fermeture (33; 821) indiqués pour s'adapter au dit trou (22; 722) sur la dite surface transversale (21) et le fermer hermétiquement, de façon à permettre ou empêcher le passage du liquide de remplissage coulant des dits un ou plusieurs deuxièmes trous (13; 130),
la dite membrane flexible définit à l'intérieur de la dite cavité (11) du dit corps (10; 100; 300) d'un côté, une chambre d'évacuation (150) communiquant avec les dits un ou plusieurs premiers trous (12; 120) et avec la fin de la dite barre tubulaire (30; 730) et, du côté opposé, une chambre pour le remplissage (50) du liquide de remplissage qui communique avec les dits un ou plusieurs deuxièmes trous (13; 130) et à l'intérieur de laquelle la pression (250) du dit liquide contenu dans la même chambre peut être variée afin de causer la déformation de la dite membrane, en donnant origine de cette façon sur la dite barre tubulaire (30; 730) à une force (332) qui augmente la force de poussée (331) créée par le dit corps flottant (31; 731) contre les dits moyens de fermeture (33).

2. Un dispositif (3; 4; 7) selon la revendication 1, caractérisé en ce que la pression (250) du liquide à l'intérieur de la dite chambre de remplissage (50) est telle à exercer sur la dite membrane (40; 740) une force (332) qui résulte être inférieure au poids total du dit corps flottant (31; 731) et de la dite barre (30; 730) soutenant la dite membrane.

3. Un dispositif (3; 4; 7) selon la revendication 1, caractérisé en ce que la dite barre tubulaire (30; 730) qui soutient le dit corps flottant (31; 731) présente un ou plusieurs trous passants (34) pour l'élimination des fumées, les dits trous passants étant positionnés au-dessus du dit corps flottant (31; 731).

4. Un dispositif (3; 4; 7) selon la revendication 1, caractérisé en ce que la dite barre tubulaire (30; 730) présente dans sa partie extérieure des ailettes de guidage (35) qui se fixent d'une manière mobile à la surface interne du dit élément de guidage (25).

5. Un dispositif (3; 7) selon la revendication 1, caractérisé en ce que le dit corps (10) du dit dispositif présente un filetage extérieur (14) qui s'unit au filetage intérieur correspondant (140) se trouvant à l'extrémité du dit trou (2) appartenant au dit couvercle (1).

6. Un dispositif (3; 7) selon la revendication 1, caractérisé en ce que les dits un ou plusieurs premiers trous (12) pour l'élimination des fumées sont deux et sont essentiellement positionnés l'un opposé à l'autre sur le même plan essentiellement horizontal et en ce que les dits deuxièmes trous (13) pour l'entrée du liquide de remplissage sont deux eux aussi et sont essentiellement positionnés l'un opposé à l'autre sur un plan essentiellement horizontal qui est essentiellement parallèle au plan où se trouvent les dits premiers trous (12), où les dits premiers trous (12) et les dits deuxièmes trous (13) communiquent les uns avec des canaux (112) pour l'élimination des fumées et les autres avec des canaux (113) pour l'entrée du liquide de remplissage obtenu dans le couvercle (1) qui les reçoit.

7. Un dispositif (4) selon la revendication 1, caractérisé en ce que les dits un ou plusieurs trous (120) pour l'élimination des fumées sont deux et sont essentiellement positionnés l'un opposé à l'autre sur le même plan essentiellement horizontal et en ce que même les dits deuxièmes trous (130) pour l'entrée de l'électrolyte sont essentiellement positionnés l'un opposé à l'autre et se trouvent sur un plan essentiellement horizontal qui est essentiellement parallèle au plan où se trouvent les dits premiers trous (120), où les dits premiers et deuxièmes trous communiquent les uns avec des canaux (212) pour l'élimination des fumées et les autres avec des canaux (213) pour l'entrée du liquide de remplissage qui appartiennent au dit corps (100) du dit dispositif (4) et en ce que les trous sont équipés de connexions des tuyaux (312, 313).

8. Un dispositif (3; 4) selon la revendication 1, caractérisé en ce que les dits moyens de fermeture sont constitués d'une fermeture (33) ayant la forme d'un tronc de cône indiqué pour s'adapter par interférence à l'intérieur du trou passant (22) percé sur la dite surface transversale (21) ayant la forme d'un tronc de cône.

9. Un couvercle (1) pour accumulateurs électriques indiqué pour recevoir les dispositifs automatiques de remplissage (3; 7) selon les revendications de 1 à 4, caractérisé en ce qu'il présente une pluralité des trous (2) chacun desquels recevant les dits dispositifs (3; 7), chacun des dits trous (2) communiquant avec de premiers conduits (112) pour l'élimination des fumées évacuées de chaque élément de batterie à travers de premiers trous (12) appartenant au dispositif automatique de remplissage (3; 7), et avec de deuxièmes conduits (113) pour l'entrée du liquide de remplissage à travers de seconds trous (13) appartenant au dispositif automatique de remplissage (3; 7), les dits conduits (112, 113) étant obtenus par le moulage du matériel plastique dans l'épaisseur du couvercle.

10. Un dispositif (3; 4; 7) selon la revendication 1, caractérisé en ce que les dits un ou plusieurs trous pour l'élimination des fumées sont constitués d'un trou passant unique (242; 760) percé dans la partie inférieure (141) du dit corps (100; 300).

11. Un dispositif (3; 4; 7) selon la revendication 1, caractérisé en ce que la dite surface transversale (21) a la forme d'un tronc de cône convergeant vers l'intérieur de l'accumulateur.

12. Un dispositif (3) selon la revendication 1, caractérisé en ce que les dits premiers moyens de blocage hermétique (32) sont constitués d'au moins un cran annulaire (232) obtenu sur la dite barre tubulaire (30), indiqué pour recevoir le bord correspondant de la dite membrane flexible (40).

13. Un dispositif (3) selon la revendication 1, caractérisé en ce que les dits moyens de blocage hermétique (132) sont constitués d'au moins un cran annulaire (332) obtenu sur le dit élément tubulaire (20), indiqué pour recevoir le bord correspondant de la dite membrane flexible (40).

14. Un dispositif (7) selon la revendication 1, caractérisé en ce que les dits moyens de fermeture sont constitués d'un rebord hermétique (821) ayant la forme d'un tronc de cône, indiqué pour s'adapter d'une manière hermétique au trou passant (722) percé sur le dit élément tubulaire (720).

15. Un dispositif (7) selon la revendication 1, caractérisé en ce que les dits premiers moyens de blocage hermétique (732) sont constitués d'une paire d'anneaux (741, 742) positionnés l'un opposé à l'autre et d'une façon coaxiale par rapport à la barre tubulaire (730), qui accueillent entre eux le bord de la dite membrane (740).

16. Un dispositif (7) selon la revendication 1, caractérisé en ce que les dits deuxièmes moyens de blocage hermétique (832) sont constitués d'un plan incliné (723) appartenant au dit élément tubulaire (720) et de son support correspondant (724) obtenu dans le corps (300) du dispositif automatique de remplissage (7), entre lesquels (?) le bord de la dite membrane (740) correspondant avec eux va se positionner.

17. Un dispositif (7) selon la revendication 10, caractérisé en ce que le dit corps (300) du dit dispositif (7) est équipé d'un couvercle (750) pour la fermeture du dit trou passant unique (760) pour l'élimination des fumées et pour la surveillance du niveau et de la densité de l'électrolyte.

18. Un dispositif (7) selon la revendication 1, caractérisé en ce qu'une cuve (900) est positionnée entre le dit corps flottant (731) et la dite barre (730) et est coaxiale avec ces deux éléments, la dite cuve (900) étant indiquée pour contenir dans sa cavité le liquide de remplissage (910) nécessaire pour créer la fermeture hydraulique en relation avec la partie intérieure du dit accumulateur.
